(19) Europäisches Patentamt / European Patent Office / Office européen des brevets

(11) **EP 2 882 826 B1**

(12) **EUROPEAN PATENT SPECIFICATION**

(45) Date of publication and mention
of the grant of the patent:
**12.12.2018 Bulletin 2018/50**

(21) Application number: **13750287.8**

(22) Date of filing: **07.08.2013**

(51) Int Cl.:
*C10B 49/22* (2006.01)     *C10B 53/02* (2006.01)
*C10B 57/06* (2006.01)     *C10C 5/00* (2006.01)
*C10G 1/08* (2006.01)

(86) International application number:
**PCT/EP2013/066533**

(87) International publication number:
**WO 2014/023759 (13.02.2014 Gazette 2014/07)**

(54) **CATALYTIC PYROLYSIS PROCESS**

KATALYTISCHES PYROLYSEVERFAHREN

PROCÉDÉ DE PYROLYSE CATALYTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.08.2012 US 201261681072 P**

(43) Date of publication of application:
**17.06.2015 Bulletin 2015/25**

(73) Proprietor: **Albemarle Europe Sprl.
1348 Louvain-la-Neuve Sud (BE)**

(72) Inventors:
• **VASIC, Milena**
**NL-2343 LE Oegstgeest (NL)**
• **PRONK, Martinus Henricus**
**NL-1185 EG Amstelveen (NL)**
• **VAN DUREN, Ruben**
**NL-1213 EW Hilversum (NL)**
• **KOCH, Melle**
**NL-1092 AJ Amsterdam (NL)**
• **VAN DEN OETELAAR, Leonardus Cornelis
Albertus**
**NL-2012 AB Haarlem (NL)**
• **VAN DER BEEK, David**
**NL-1507 SB Zaandam (NL)**

(74) Representative: **Uexküll & Stolberg
Partnerschaft von
Patent- und Rechtsanwälten mbB
Beselerstraße 4
22607 Hamburg (DE)**

(56) References cited:
**EP-A1- 2 105 486      WO-A2-2008/009643
US-A1- 2008 032 884      US-B2- 6 593 265**

## Description

### TECHNICAL FIELD

This invention relates to new catalytic pyrolysis processes conducted in the absence of added air, added molecular oxygen, added molecular hydrogen, and added liquids such as water. Superior pyrolysis oils are formed by such processes.

### BACKGROUND

Biomass pyrolysis has been extensively studied over the years as a means of preparing pyrolysis products suitable for use as a source of commercially desirable end products such as hydrocarbon-based transportation fuels or various oxygen-containing chemical products of commercial utility. During the course of such extensive research, in many cases it has been found necessary to develop systems for deriving these desired end products via use of pretreatments of biomass before pyrolysis or by subsequent processing steps after forming the initial pyrolysis products. Moreover, it has been found that (i) the pyrolysis oils formed as products from the pyrolysis reaction often have undesirable properties such as undesirably high acidic properties, and resultant high corrosivity toward ferrous metals and (ii) the gaseous products that are co-formed have high contents of oxygen-containing components such as alcohols, aldehydes, phenols, ethers, and the like.

When utilizing biomass pyrolysis to produce pyrolysis oils enriched in hydrocarbons to serve as hydrocarbonaceous transportation fuels, it is desirable, if possible, to produce a pyrolysis oil having a low content of oxygen-containing materials and concurrently gaseous components containing a high content of oxygen-containing materials such as water, carbon monoxide, and carbon dioxide since these gaseous materials take away oxygen that would otherwise end up in the pyrolysis oil.

U.S. Patent No. 8,293,952 (published as U.S. 2011/0245545) discloses a method of producing an alcohol-containing pyrolysis product. The method involves pyrolyzing a hydrocarbon feedstock in the presence of a basic metal oxide catalyst to produce a pyrolysis product which contains at least one alcohol, wherein the metal oxide catalyst is comprised of at least one metal from Group 2, Group 3, including Lanthanides and Actinides, and Group 4 of the Periodic Table of Elements. In discussing the various catalyst systems that can be used it is indicated that preferred oxides containing at least one Group 2 metal include, but are not limited to, one or more of magnesium oxides, calcium oxides, and hydrotalcite ($Mg_6Al_2(CO_3)(OH)_{16} \cdot 4H_2O$), which can, in one embodiment, be calcined to form a basic magnesium aluminum oxide catalyst, representing a Group 2 metal oxide catalyst of the disclosure. To demonstrate the described invention, the Examples given in the published application involve showing that using various oxide catalyst systems, an aldehyde (formaldehyde) can be converted into an alcohol (methanol) via the Cannizzaro reaction. In Example 5 the metal oxide component was hydrotalcite. Analysis of that reactor effluent showed the methanol concentration to be about 143% greater than that of the feed.

EP 2 105 486 A1 discloses a bio-crude having a Total Acid Number (TAN) of less than 10 and a process for preparing this bio-crude.

### SUMMARY OF THE INVENTION

Catalysts have been found that when properly employed in biomass pyrolysis, directly achieve the concurrent goals of (i) producing pyrolysis oils having reduced acidity and reduced contents of oxygen-containing components such as alcohols, aldehydes, phenols, ethers, and the like, and (ii) producing gaseous co-products enriched in oxygen-containing components, especially water, carbon monoxide, and carbon dioxide. Moreover, it appears that the above advantageous results achieved pursuant to this invention can result from synergistic behavior among the components utilized in the catalyzed biomass pyrolysis processes of this invention.

Thus in one embodiment of this invention there is provided a biomass pyrolysis process in which a special kind of calcium-containing solid heterogeneous catalyst is used. This process makes it possible to achieve one or more of the above advantageous features.

Thus provided by this invention in one of its embodiments is a pyrolysis process for producing partially condensable vaporous products from a particulate or subdivided biomass material which is untreated except for optional drying and/or size reduction, said process comprising;

A) subjecting such biomass material to pyrolysis at one or more temperatures of 500°C and above, above 510°C and higher, and preferably temperatures in the range of about 500°C to about 650°C, and more preferably in the range of about 510°C to about 575°C, in a reactor containing (i) a catalyst which as charged to the reactor is a rehydrated calcined calcium-containing layered dihydroxide comprised of particles having an average particle size in the range of about 40 to about 400 microns, and preferably in the range of about 50 to about 150 microns, which catalyst optionally is in a pre-agglomerized flowable or fluidizable shaped form, and (ii) a particulate fluidizable heat transfer medium, preferably sand, to form pyrolysis products; and

B) condensing and isolating liquid pyrolysis oil product from the pyrolysis products and collecting and isolating non-condensable gases separately from the condensed isolated liquid pyrolysis oil product.

In one preferred embodiment of the above process, the catalyst as charged (i.e., just before being charged) into the reactor contains in the range of about 0.1 to about 20 wt% of calcium, preferably in the range of about 1 to about 20 wt% of calcium, and more preferably in the range of about 1 to about 10 wt% of calcium, and wherein the contents of the reactor is and remains free of separately added metal components other than (a) divalent and trivalent metal contents of the layered dihydroxide of the catalyst and (b) the added calcium content of the catalyst.

In another preferred embodiment, the layered dihydroxide component of the catalyst as charged into the reactor comprises, consists essentially of, or consists of a magnesium/aluminum layered dihydroxide. In this embodiment it is preferred that the molar ratio of MgO to $Al_2O_3$ in the magnesium/aluminum layered dihydroxide is in the range of about 2:1 to about 8:1, more preferably in the range of about 3:1 to about 5:1, and still more preferably is approximately 4:1.

In each of the above embodiments the pyrolysis is preferably a fast pyrolysis, which may also be referred to as a flash pyrolysis. Such pyrolysis reactions are characterized by rapid heat up of the biomass material and a very short residence time for the vaporous pyrolysis products in the reactor. Various reactor designs are known in which such rapid pyrolysis operations can be effectively carried out.

An especially preferred method of carrying out a fast pyrolysis process of this invention from solid particulate or subdivided solid state biomass material comprises:

A) introducing a particulate or subdivided solid state biomass material which is untreated except for optional drying and/or size reduction into a fluidized bed reactor containing a particulate fluidizable heat transfer medium, preferably sand, and a catalyst which when charged to the reactor comprised rehydrated calcined calcium-containing layered dihydroxide comprised of particles having an average particle size in the range of about 40 to about 400 microns, and preferably is in the range of about 50 to about 150 microns, which catalyst optionally was in a pre-agglomerized flowable or fluidizable shaped form, said reactor being operated under fast or flash pyrolysis conditions to produce partially condensable vaporous products; and

B) continuously removing condensable vaporous products from the reactor, condensing and isolating liquid pyrolysis oil product from said condensable vaporous products, and collecting and isolating non-condensable gases separately from the condensed isolated liquid pyrolysis oil product.

Although the processes of this invention can be conducted using a wide variety of biomass materials, it is generally preferred to employ a lignocellulosic biomass.

As noted above, this invention makes possible the achievement of at least one and often two very beneficial results as regards pyrolysis oil products produced pursuant to the invention. Accordingly, this invention also provides a process wherein the total acid number of the liquid pyrolysis oil product measured in terms of milligrams of KOH/gram of liquid product is lower than the total acid number measured in the same way on a liquid pyrolysis oil product obtained by pyrolysis under the same conditions except for use of sand alone (100 parts by weight) or a combination of a layered dihydroxide (25 parts by weight) and sand (75 parts by weight) in place of the rehydrated calcined calcium-containing layered dihydroxide catalyst (25 parts by weight) and sand (75 parts by weight).

Alternatively or preferably, this invention further provides a process as described herein wherein the weight percentage of oxygen removed from the biomass material fed -- as determined by the hereinafter-described General Pyrolysis Test Procedure and as calculated in accordance with the expression given and described above -- is higher than the weight percentage, as determined in the same way, of oxygen removed from biomass material subjected to pyrolysis under the same conditions and except for use of sand alone (100 parts by weight), a layered dihydroxide alone (100 parts by weight), or a combination of a layered dihydroxide (25 parts by weight) and sand (75 parts by weight) in place of the rehydrated calcined calcium-containing layered dihydroxide catalyst (25 parts by weight) and sand (75 parts by weight).

These and other embodiments, features, and/or advantages of this invention will become still further apparent from the ensuing description, accompanying figures, and appended claims.

## DESCRIPTION OF THE DRAWINGS

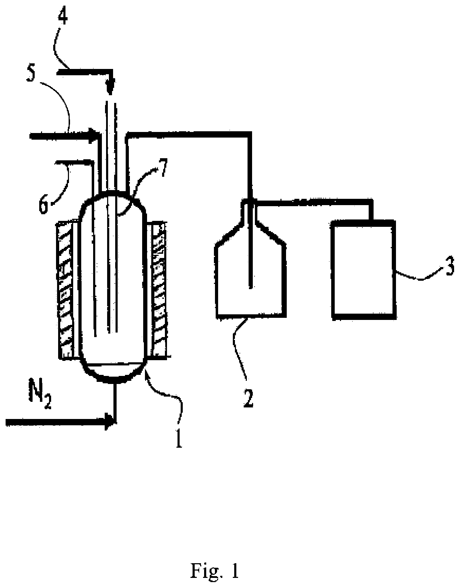

Fig. 1 is a side view in section of a preferred semi-adiabatic fluid bed performance test apparatus which enables rapid evaluation pursuant to this invention of the performance of fluidizable catalyst compositions with respect to acidity of, and oxygen removal from, pyrolysis oil products produced using such catalyst compositions. The apparatus includes a reactor **1**, a product receiver **2**, and a gas bag **3**. The reactor **1** has a biomass material feed line **4**, a heat carrier feed line **5**, a thermocouple **6**, a dipleg **7**, and a nitrogen gas ($N_2$) inlet.

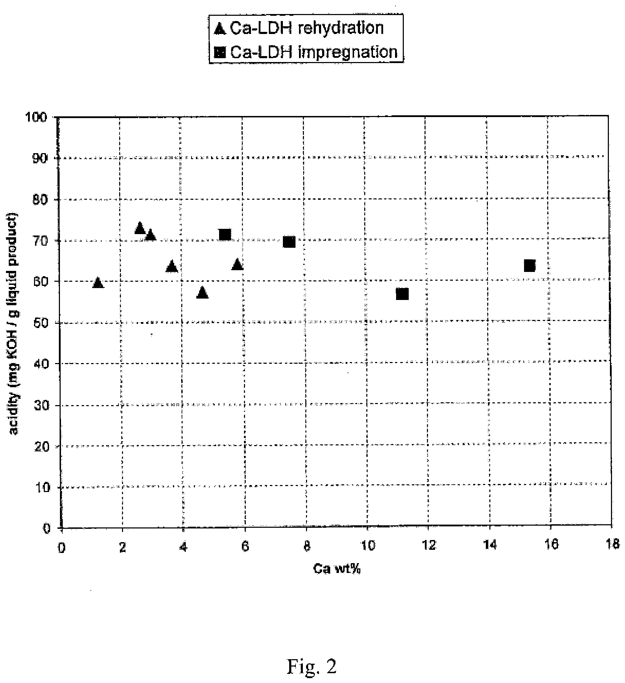

Fig. 2 shows a plot of results of evaluations of the acidity of pyrolysis oil products of this invention formed pursuant to this invention by pyrolysis using rehydrated calcined calcium-containing layered dihydroxide catalyst compositions comprised of particles having an average particle size in the range of about 40 to about 400 microns, and preferably is in the range of about 50 to about 150 microns, when such pyrolysis products are tested in a test apparatus of Fig. 1.

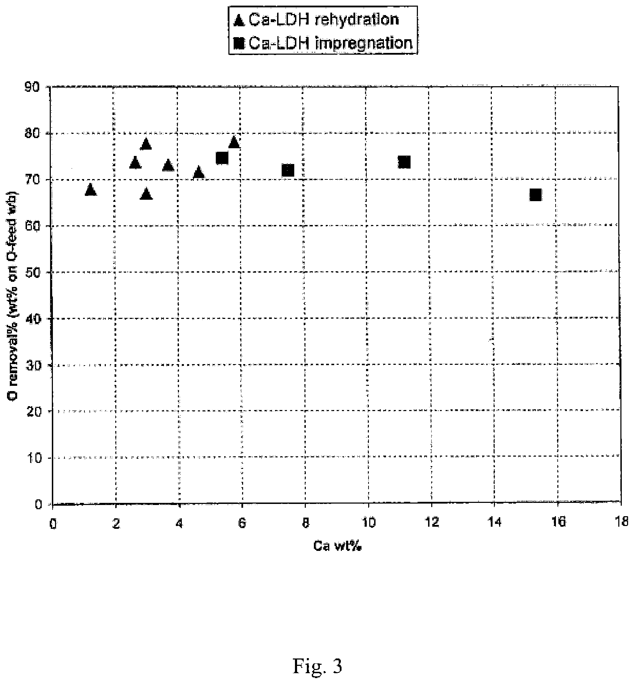

Fig. 3 shows a plot of results of evaluations of the oxygen removal of pyrolysis oil products of this invention formed pursuant to this invention by pyrolysis using rehydrated calcined calcium-containing layered dihydroxide catalyst compositions comprised of particles having an average particle size in the range of about 40 to about 400 microns, and preferably is in the range of about 50 to about 150 microns, when such pyrolysis products are tested in a test apparatus of Fig. 1.

## GLOSSARY

As used anywhere in this document, including the claims:

► The terms "pyrolysis" and "pyrolysis conditions" mean heating the biomass in the substantial absence of air, molecular oxygen, molecular hydrogen, and added liquids such as water.

► The term "fast pyrolysis", and/or "flash pyrolysis", means rapid pyrolysis of biomass material such that the average residence time of the vaporous pyrolysis products in the pyrolysis reactor is 30 seconds or less, preferably 20 seconds or less, and more preferably 10 seconds or less.

► The term "subdivided" in connection with biomass material means separated in to pieces, chips, granules, clumps, shreds, sawdust, or the like of size small enough to be fed into a pyrolysis reactor without blocking or otherwise interfering significantly with passage into the pyrolysis reactor.

► The term "shaped form" in connection with the catalyst composition means that smaller particles have agglomerated or have been caused to agglomerate -- with or without a binding agent that does not harm the pyrolysis process of this invention or the pyrolysis oil product of this invention in any way -- into larger particulate bodies in feedable form into a pyrolysis reactor when fed into the pyrolysis reactor and/or in fluidizable form after having been fed into a fluidized bed reactor, such larger bodies being in such non-limiting form as pellets, beads, granules, spheres, pastilles, flakes, chips, or the like.

► The term "rehydrated" as used in the phrase "rehydrated calcined calcium-containing layered dihydroxide" means that the rehydration, which activates the catalyst, is conducted at any suitable stage of catalyst preparation before the final calcination step that completes the formation of the catalyst composition. This is demonstrated in Examples 1, 2, and 3 hereinafter.

## FURTHER DETAILED DESCRIPTION OF THIS INVENTION

Various terms are used in the art to describe the materials that are referred to herein as a layered dihydroxides. Anionic clays, layered dihydroxides, and hydrotalcite-like compounds are terms used interchangeably by those skilled in the art. These layered dihydroxides have regular well-formed layers of platelets. A more detailed description of this and other types of layered dihydroxides can be found in various publications referred to in U.S. Patent No. 6,593,265 to Stamires et al., issued July 15, 2003, from Col. 1, line 46 to Col. 2, line 51. As noted in this patent to Stamires et al., an anionic clay (or layered dihydroxide) can be heat-treated at a temperature between 300 and 1200°C to form a Mg-Al-containing solid solution and/or spinel. The so formed solid solution can be rehydrated to form an anionic clay again.

The calcination temperatures are preferably between 300 and 800°C and most preferred between 300 and 600°C. This calcination is conducted for 15 minutes to 24 hours, preferably 1-12 hours and most preferably for 2-6 hours. By this treatment a Mg-Al containing solid solution and/or spinel can be formed. The so formed solid solution can be rehydrated to again form an anionic clay or layered dihydroxide.

Jones et al., U.S. Published Patent Application No. U.S. 2008/0032884, published February 7, 2008, has a useful disclosure concerning preparation of additive-containing anionic clays (or layered dihydroxides). In essence the process comprises the steps of:

(a) milling a physical mixture of a divalent metal compound and a trivalent metal compound,

(b) calcining the milled physical mixture at a temperature in the range 200-800°C, and

(c) rehydrating the calcined mixture in aqueous suspension to form the additive-containing anionic clay, wherein an additive is present in the physical mixture and/or the aqueous suspension of step (c).

In this process, the term "physical mixture" refers to a mixture of the compounds of (a), either in a dry or aqueous state, which compounds have not reacted with each other to any significant extent before calcination. Thus, the physical mixture has not been aged to form a layered dihydroxide before calcination.

Suitable divalent metal contents of layered dihydroxides include magnesium, zinc, nickel, copper, iron, cobalt, manganese, barium, strontium, and combinations thereof. The most preferred divalent metal compound is magnesium. Non-limiting examples of divalent metal compounds that may be used in forming layered dihydroxides include generally water-insoluble compounds of these metals such as their oxides, hydroxides, carbonates, hydroxycarbonates, and bicarbonates, and generally water-soluble salts of these metals such as acetates, hydroxyacetates, nitrates, and chlorides. In the case of the preferred magnesium compounds, use may be made of water-insoluble magnesium compounds such as magnesium oxides or hydroxides such as MgO, Mg(OH)$_2$, magnesium carbonate, magnesium hydroxycarbonate, magnesium bicarbonate, hydromagnesite and magnesium-containing clays such as dolomite, saponite, and sepiolite. Suitable water-soluble magnesium compounds include, for example, magnesium acetate, magnesium formate, magnesium(hydroxy)acetate, magnesium nitrate, and magnesium chloride. It is to be understood that calcium compounds are not used in forming the layered dihydroxide because a compound of calcium is to be used as the additive to the layered dihydroxide.

Suitable trivalent metal contents of layered dihydroxides include aluminum, gallium, iron, chromium, vanadium, cobalt, manganese, nickel, indium, cerium, niobium, lanthanum, and combinations thereof. Aluminum is the most preferred trivalent metal. Non-limiting examples of trivalent metal compounds that may be used in forming layered dihydroxides include generally water-insoluble compounds of these metals such as their oxides, hydroxides, carbonates, hydroxycarbonates, bicarbonates, alkoxides, and generally water-soluble salts such as acetates, hydroxyacetates, nitrates, and chlorides. In the case of the preferred aluminum compounds, use may be made of aluminum oxides and hydroxides such as transition alumina, aluminum trihydrate (bauxite ore concentrate, gibbsite, bayerite) and its thermally treated forms (including flash-calcined aluminum trihydrate), sols, amorphous alumina, and pseudoboehmite, aluminum-containing clays such as kaolin, sepiolite, bentonite, and modified clays such as metakaolin. Suitable water-soluble aluminum salts are aluminum nitrate, aluminum chloride, and aluminum chlorohydrate.

Preferred divalent and trivalent metal compounds are oxides, hydroxides, carbonates, hydroxycarbonates, bicarbonates, and (hydroxy)acetates, as these materials are relatively inexpensive. Moreover, these materials do not leave undesirable anions in the additive-containing layered dihydroxide which either have to be washed out or will be emitted as gases upon heating.

In forming the catalysts used in the pyrolysis processes of this invention, a suitable calcium compound is used to provide the calcium of the catalyst composition. Non-limiting examples of suitable calcium compounds include calcium oxide, calcium hydroxide, calcium carbonate, calcium hydroxycarbonate, calcium nitrate, calcium chloride, calcium bromide, calcium sulfate, and calcium phosphate. Use of calcium nitrate is preferred because of its availability, low cost, and water solubility. Also the nitrate anion is not harmful to catalyst properties or performance.

The catalysts in this invention are formed from one or more layered dihydroxides and at least one suitable calcium compound. The one or more layered dihydroxides and at least one suitable calcium compound are brought into contact. Rehydration, which activates the catalyst, is conducted at any suitable stage of catalyst preparation before the final calcination step that completes the formation of the catalyst composition.

Calcination temperatures used in forming the catalysts used in this invention can vary. Typically, suitable calcination temperatures are in the range of about 550°C to about 800°C. Preferred temperatures are in the range of about 500°C to about 650°C. Temperatures in the range of about 500°C to about 600°C such as 550°C are more preferred.

It is to be understood that except for naturally-occurring metallic components present in the biomass itself, the pyrolysis mixture in the reactor is preferably free of added metals other than (i) the divalent and trivalent metals of the layered dihydroxide, preferably magnesium and aluminum, but which may be other divalent and/or trivalent metals referred to above, and (ii) the added calcium content of the catalyst. Metal addition other than Mg and Al to form the layered dihydroxide is preferably conducted such that only one of Mg and Al is replaced by another divalent or trivalent metal as the case may be, so that the resultant layered dihydroxide is composed of an oxide of either Mg or of Al plus an oxide of the added metal (other than calcium).

It is to be understood and appreciated that whenever the word "catalyst" has been or is used anywhere herein, the substance referred to is to be considered a catalyst precursor because, in use, it (the "catalyst") is exposed to other materials under various reaction conditions. Thus, although as charged to the reactor, it (the "catalyst") comprises, consists essentially of, or consists of specified substances, it (the "catalyst") may undergo chemical and/or physical changes under the particular reaction conditions existing in the pyrolysis reactor.

In conducting the pyrolysis or flash pyrolysis operations of this invention, it is desirable that the reactor contains a solid state particulate heat carrier. Of the solid state particulate heat carriers (sometimes referred to as heat transfer agents) that can be used, sand (e.g., silica sand) is plentiful and very effective. Other materials such as volcanic ash, crushed rock, pulverized concrete, etc., can be used if desired provided they do not contribute more than trace amounts of alkali metals to the pyrolysis mixture. Mixtures of different solid state particulate heat carriers can be used if desired.

A wide range of biomass feedstocks of various types and moisture contents can be utilized in the practice of this invention. Generally speaking, the lower the natural moisture content in the feedstock, the lower will be the energy requirements for the pyrolysis. The biomass feedstock can include one or more materials selected from fast-growing woods (e.g., willow and poplar), timber harvesting residues or forestry waste material, softwood chips, hardwood chips, tree branches, tree stumps, leaves, bark, sawdust, off-spec paper pulp, agricultural waste material, corn, corn stover, wheat straw, rice straw, sugarcane bagasse, switchgrass, municipal waste, commercial waste, grape pumice, almond shells, pecan shells, coconut shells, coffee grounds, grass pellets, hay pellets, wood pellets, cardboard and paper. Cellulosic biomass may be used as well. However, it has been reported that such materials tend to form sticky residues during pyrolysis. Thus careful temperature control and frequent cleaning of the pyrolysis reactor and related materials such as agitators, etc. are recommended when using cellulosic biomass. Generally speaking, lignocellulosic biomass materials and analogous materials capable on pyrolysis of providing substantial amounts of hydrocarbons are preferred for use. Such materials may be processed on a batch, semi-batch or continuous basis, as desired.

Optional pretreatment of the biomass material pursuant to this invention is limited to two types of pretreatment. One such pretreatment is to pre-dry the biomass material prior to use in the pyrolysis. This can be accomplished by application of heat, storage under suitable temperature conditions for suitable lengths of time, use of blow drying or other similar air drying techniques, and the like. The other pretreatment is to reduce to the size of the biomass material before its use in the pyrolysis. This typically involves a suitable mechanical treatment such as milling, grinding, kneading, chopping, sawing, or other physical methods of size reduction, or a combination thereof.

In a desirable mode of operation, the pyrolysis is conducted at substantially atmospheric pressure and the biomass material is carried into the pyrolysis reactor in a flow of inert anhydrous carrier gas such as dry nitrogen or other inert anhydrous carrier gas such as neon, argon, or krypton.

Especially when conducting fast pyrolysis, it is desirable to continuously purge the reactor with a pressurized flow of inert gas. Nitrogen is often used. However, other suitable inert gases can be used such as, for example, argon, neon, krypton, or the like. A reduced pressure may be applied to the pyrolysis reactor to expedite rapid removal of the gaseous pyrolysis products from the reactor.

In conducting the pyrolysis methods referred to above, the operation is preferably conducted under fast pyrolysis conditions. Thus, the temperature is elevated from ambient up to and above 500°C and preferably no higher than about 650°C, typically at a rate of at least 100°C per second. Another way of achieving fast pyrolysis is to conduct the operation so that the average residence time of the pyrolysis products within the pyrolysis reactor is very short. Desirably, the maximum pyrolysis temperature used in this invention is about 650°C and preferably is no more than about 575°C. Desirable and preferred temperature ranges are from above 500°C to about 600°C and in the range of about 510°C to about 575°C at substantially atmospheric pressure. Reactors which can be used include fluid bed reactors, auger reactors, bubble reactors, or the like.

We turn now to actual experimental demonstrations of the advantageous results achievable by the practice of this invention. It is to be clearly understood and appreciated that although these particular experimental scale operations do illustrate the practice of this invention, the invention is not to be limited in any way to the scale of operations or reaction conditions used in these demonstration experiments. Rather in practice on an industrial scale, the scale would be much larger and the conditions would not necessarily be the same as used in these demonstration experiments - the industrial scope and conditions would be, however, within the scope of this invention.

*General Pyrolysis Test Procedure*

In conducting the experimental pyrolysis demonstration reactions, the following General Pyrolysis Test Procedure was used: lignocellulosic biomass (having a composition of about 45 wt% carbon, about 6 wt% hydrogen, and about 49 wt% oxygen), 3 grams on a wet basis, without any pretreatment or drying is injected into a fluidized catalyst bed (48 grams in total consisting of 25 wt% of catalyst blended with 75 wt% of sand) at 515°C at atmospheric pressure via a feed line attached to the top of the reactor using a 3 bar nitrogen pressure for purge. The injection time used is 1 second. After pyrolysis, the fluidized bed is stripped with nitrogen. Liquid product is condensed and collected in a product receiver with a cold trap (-4°C). Pyrolysis gases and nitrogen are collected in a gas bag. See Fig. 1.

The pyrolysis gases are analyzed using gas chromatographic methods and the yields of $CO$ and $CO_2$ are quantified as wt% on the biomass material fed (also referred to as "wt% on feed"), reported on a wet basis. The liquid (pyrolysis oil) is homogenized by dilution with tetrahydrofuran (THF). The homogenized liquid is analyzed for water content and acidity. The total water yield found in the pyrolysis oil (corrected for THF dilution) is determined by standard Karl-Fischer titration and reported as wt% based on biomass material fed (wet basis). The acidity is reported as mg KOH per gram of liquid product at the equivalence point of the titration curve.

The oxygen removal (from the biomass material fed) achieved by such a pyrolysis experiment is expressed in the following way:

$$O_{removal} = \frac{X_{CO} \cdot M_O / M_{CO} + X_{CO2} \cdot 2M_O / M_{CO2} + X_{H2O} \cdot M_O / M_{H2O}}{O_{feed} / 100\%}$$

Wherein:

$O_{removal}$ is wt% of oxygen removed (wt% based on oxygen in the biomass material fed)
$M_O$ : molar mass of O = 15.999 (g/mol)
$X_{CO}$ : yield of CO (wt% on biomass material fed)
$M_{CO}$ : molar mass of CO = 28.01 (g/mol)
$X_{CO2}$ : yield of $CO_2$ (wt% on biomass material fed)
$M_{CO2}$ : molar mass of $CO_2$ = 44.01 (g/mol)
$X_{H2O}$ : yield of $H_2O$ (wt% on biomass material fed)
$M_{H2O}$ : molar mass of $H_2O$ = 18.02 (g/mol)
$O_{feed}$ : oxygen content in the biomass material fed (wt%), which is 49 wt% for the lignocellulosic feed.

The following Examples are presented to illustrate the practice and advantages of this invention. However, they are not to be construed as limiting the scope of the invention to only the scope of these Examples.

## EXAMPLE 1

*Preparation of Layered Dihydroxide Catalyst*

To a 15 wt% aqueous slurry of low-crystalline boehmite alumina, magnesium oxide was added under stirring, to yield a mixture with a molar ratio of $MgO/Al_2O_3$ = 4. Then, the slurry was milled in a ball-mill to obtain an average particle size of 3 to 4 $\mu$m. An aging step was performed by maintaining the slurry at 45°C for 1 hour. The aged slurry was then spraydried in air atmosphere, with an inlet temperature of 550°C and an outlet temperature of 140°C to obtain a dry, white powder that was calcined for 1 hour at 550°C. The resulting product is a layered dihydroxide (LDH) precursor.
This precursor was activated or "rehydrated" by preparing a 25 wt% slurry of the material in water and aging that for 4 hours at 80°C. The material was then cooled down to 40°C, filtered and dried at 120°C overnight. The final step was calcination of this material for 1 hour at 550°C, after which it was stored in the absence of humidity until testing.

## EXAMPLE 2

***Preparation of a Catalyst Using Calcium and a Layered Dihydroxide, by Calcium Loading and Rehydrating in a Single Step***

To 1013 mL of water, 221 grams of calcium nitrate was added and stirred to dissolve completely. This solution was added to 348 grams (LOI = 3%) of LDH precursor, made as described in Example 1. The resulting slurry was aged for 1 hour at 80°C. The slurry was dried by evaporation of the water to yield a powder material. The material was sieved to yield a particle size between 50 and 150 $\mu$m. The final step was a calcination of this material for 1 hour at 550°C, after which it was stored in the absence of humidity until testing. The catalyst obtained had a Ca loading (measured as the weight of the metal on the catalyst) of 5.8 wt%.

## EXAMPLE 3

***Preparation of a Catalyst Using Calcium and a Layered Dihydroxide, by Impregnation after Rehydration***

A layered dihydroxide precursor was made and rehydrated as described in Example 1, except that the final calcination step was not conducted yet so that the product at this point was the activated or "rehydrated" LDH precursor which had been cooled down to 40°C, filtered and dried at 120°C.
A calcium nitrate solution was prepared by adding 17.6 grams of calcium nitrate tetrahydrate to a heel of water, yielding a solution with a total volume of 42 mL. This solution was used to impregnate the above-referred-to activated or "rehydrated" LDH precursor material described in the first paragraph of this example, according to the incipient wetness technique, a method well-known to those skilled in the art. See for example J. Haber, et al., "Manual of Methods and Procedures for Catalyst Characterization", (Pure and Appl. Chem., Vol. 67, No. 8/9, pp 1257-1306, 1995), or Krijn, de Jong, "Synthesis of Solid Catalysts", (Wiley, 2009). The resulting powder was kept to age at room temperature for 1 hour, and subsequently dried at 120°C overnight. A final step of sieving the material (to a particle size between 50 and

150 $\mu$m) and calcining at 550°C 1 hour was performed, and the material was stored in the absence of humidity until testing. The catalyst obtained had a Ca loading (measured as the weight of the metal on the catalyst) of 5.4 wt%.

**COMPARATIVE EXAMPLE A**

*Preparation of a Catalyst Using a Calcium Source and Alumina*

A Puralox® alumina powder with a surface area of 105 m$^2$/g, a pore volume of 0.4 mL/g, and which exhibited a loss on ignition (LOI) of 1.5%, was impregnated with a solution of calcium nitrate. The calcium nitrate solution was made by dissolving 59 grams of calcium nitrate tetrahydrate in water to yield a total volume of 85 mL. This solution was used to impregnate 193 grams of the above alumina according to the incipient wetness technique, a method well-known to those skilled in the art. The impregnated material was kept at 60°C for 1 hour, and dried overnight at 130°C. The material was thereafter sieved to yield a particle size between 50 and 150 $\mu$m. The final step was a calcination of this material for 1 hour at 550°C, after which it was stored in the absence of humidity until testing.

Pyrolysis experiments using the General Pyrolysis Test Procedure as described above have been conducted using samples of the following materials:

1) Sand

2) Layered dihydroxides, also known as anionic clay or hydrotalcite-like compounds (HTC) plus sand in a sand:catalyst wt. ratio of 75:25

3) 5 wt% Ca/alumina, using Ca nitrate as salt and Puralox® alumina as a carrier or support plus sand in a sand:catalyst wt. ratio of 75:25

4) 5.8 wt% rehydrated calcined calcium-containing layered dihydroxide formed as in Example 2 via a loading/impregnation route, using Ca nitrate as the added calcium compound plus sand in a sand:catalyst wt. ratio of 75:25

5) 5.4 wt% rehydrated calcined calcium-containing layered dihydroxide formed as in Example 3 via an impregnation after rehydration route, using Ca nitrate as the added calcium compound plus sand in a sand:catalyst wt. ratio of 75:25.

The results are shown in Table I, where "wb" means wet basis.

**TABLE I**

|  |  | Pyrolysis oil acidity | H$_2$O yield | CO yield | CO$_2$ yield | O removal% |
|---|---|---|---|---|---|---|
|  |  | mg KOH/g product liquid | wt% on feed (wb) | wt% on feed (wb) | wt% on feed (wb) | wt% on O-feed (wb) |
| 1* | Sand | 109 | 21.3 | 3.7 | 6.4 | 52 |
| 2* | LDH + Sand | 95 | 26.1 | 4.5 | 10.9 | 69 |
| 3* | Ca/alumina from Comparative Ex. A + Sand | 84 | 23.2 | 3.9 | 8.3 | 59 |
| 4 | Ca/LDH from Ex. 2 + Sand | 64 | 29.3 | 4.4 | 13.4 | 78 |
| 5 | Ca/LDH from Ex. 3 + Sand | 71 | 26.4 | 4.5 | 14.5 | 75 |
| * Comparative runs. |  |  |  |  |  |  |

It can be seen from the results in Table I that the calcium/layered dihydroxide catalyst used pursuant to this invention gave significantly better results (lower acidity, higher oxygen removal), which in turn results in a much higher quality pyrolysis oil. Moreover, Table I also illustrates that the higher oxygen removal% using the Ca/LDH catalysts occurs via the most desired oxygen removal pathway, which is via CO$_2$ removal instead of water removal. Removal of oxygen as CO$_2$ retains a higher percentage of the hydrogen content of the pyrolysis oil product, which results in a more paraffinic fuel product with a higher energy content, while removal of oxygen as H$_2$O reduces the hydrogen to carbon (H/C) ratio of the pyrolysis oil product. In other words, when Ca/LDH catalysts are used, the pyrolysis oil products formed are further characterized by having a higher weight percentage of carbon dioxide removed as determined by the General Pyrolysis Test Procedure as compared to products prepared and tested in the same way except that no catalyst is used. In this connection, see S. Kersten et. al., in Catalysis for Renewables: From Feedstock to Energy Production (Wiley-VCH Verlag, 2007) pages 119-141, eds. G. Centi and A. van Santen.

These advantageous results have been found in additional tests conducted in the same general manner to be independent of the two catalyst preparation routes used. This is clearly shown by the graphs in Figs. 2 and 3.

Further embodiments of the invention include:

AA) A pyrolysis process for producing partially condensable vaporous products from a particulate or subdivided biomass material which is untreated except for optional drying and/or size reduction, said process comprising;

A) subjecting said biomass material to pyrolysis at one or more temperatures of 500°C and above, above 510°C and higher, and preferably temperatures of about 500°C to about 650°C, and more preferably about 510°C to about 575°C, in a reactor containing (i) a catalyst which as charged to the reactor is a rehydrated calcined calcium-containing layered dihydroxide comprised of particles having an average particle size of about 40 to about 400 microns, preferably about 50 to about 150 microns, which catalyst optionally is in a pre-agglomerized flowable or fluidizable shaped form, and (ii) a particulate fluidizable heat transfer medium, preferably sand, to form pyrolysis products; and

B) condensing and isolating liquid pyrolysis oil product from said pyrolysis products and collecting and isolating non-condensable gases separately from the liquid pyrolysis oil product.

AB) A pyrolysis process as in AA) wherein said catalyst as charged into the reactor contains about 0.1 to about 20 wt% of calcium, preferably about 1 to about 20 wt% of calcium, and more preferably about 1 to about 10 wt% of calcium, and wherein the contents of the reactor is and remains free of separately added metal components other than (a) divalent and trivalent metal contents of the layered dihydroxide of said catalyst and (b) the added calcium content of said catalyst.

AC) A pyrolysis process as in any of AA) or AB) wherein said catalyst as charged into the reactor has a layered dihydroxide component which comprises, consists essentially of, or consists of a magnesium/aluminum layered dihydroxide.

AD) A pyrolysis process as in AC) wherein said magnesium/aluminum layered dihydroxide has a molar ratio of MgO to $Al_2O_3$ of about 2:1 to about 8:1, preferably in the range of about 3:1 to about 5:1, and still more preferably is approximately 4:1.

AE) A process as in any of AA)- AD) wherein said pyrolysis is a fast pyrolysis.

AF) A process as in any of AA)- AE) wherein the biomass material is a lignocellulosic biomass.

AG) A process as in any of AA)- AF) wherein said liquid pyrolysis oil product has a total acid number measured in terms of milligrams of KOH/gram of liquid product that is lower than a total acid number measured in the same way on a liquid pyrolysis oil product obtained by pyrolysis under the same conditions except for use of sand alone (100 parts by weight) or a combination of a layered dihydroxide (25 parts by weight) and sand (75 parts by weight) in place of said catalyst (25 parts by weight) and sand (75 parts by weight).

AH) A process as in any of AA)- AF) wherein the biomass material fed has a weight percentage of oxygen removed as determined by the General Pyrolysis Test Procedure and as calculated in accordance with the expression

$$O_{removal} = \frac{X_{CO} \cdot M_O / M_{CO} + X_{CO2} \cdot 2M_O / M_{CO2} + X_{H2O} \cdot M_O / M_{H2O}}{O_{feed} / 100\%}$$

wherein:

$O_{removal}$ is wt% of oxygen removed (wt% based on oxygen in the biomass material fed)
$M_O$ : molar mass of O = 15.999 (g/mol)
$X_{CO}$ : yield of CO (wt% on biomass material fed)
$M_{CO}$ : molar mass of CO = 28.01 (g/mol)
$X_{CO2}$: yield of $CO_2$ (wt% on biomass material fed)
$M_{CO2}$ : molar mass of $CO_2$ = 44.01 (g/mol)
$X_{H2O}$ : yield of $H_2O$ (wt% on biomass material fed)
$M_{H2O}$ : molar mass of $H_2O$ = 18.02 (g/mol)
$O_{feed}$ : oxygen content in the biomass material fed (wt%),

is higher than the weight percentage, as determined in the same way, of oxygen removed from biomass material subjected to pyrolysis under the same conditions except for use of sand alone (100 parts by weight) or a combination of a layered dihydroxide (25 parts by weight) and sand (75 parts by weight) in place of the rehydrated calcined calcium-containing layered dihydroxide catalyst (25 parts by weight) and sand (75 parts by weight).

Components referred to by chemical name or formula anywhere in the specification or claims hereof, whether referred to in the singular or plural, are identified as they exist prior to coming into contact with another substance referred to by chemical name or chemical type (*e.g.*, another component, a solvent, or *etc.*). It matters not what chemical changes, transformations and/or reactions, if any, take place in the resulting mixture or solution as such changes, transformations, and/or reactions are the natural result of bringing the specified components together under the conditions called for pursuant to this disclosure.

Except as may be expressly otherwise indicated, the article "a" or "an" if and as used herein is not intended to limit, and should not be construed as limiting, a claim to a single element to which the article refers. Rather, the article "a" or "an" if and as used herein is intended to cover one or more such elements, unless the text expressly indicates otherwise.

This invention is susceptible to considerable variation in its practice. Therefore the foregoing description is not intended to limit, and should not be construed as limiting, the invention to only the particular exemplifications presented hereinabove.

**Claims**

1. A pyrolysis process for producing partially condensable vaporous products from a particulate or subdivided biomass material which is untreated except for optional drying and/or size reduction, said process comprising:

   A) subjecting said biomass material to pyrolysis at one or more temperatures of 500°C and above in a reactor containing (i) a catalyst which as charged to the reactor is a rehydrated calcined calcium-containing layered dihydroxide comprised of particles having an average particle size of 40 to 400 microns, which catalyst optionally is in a pre-agglomerized flowable or fluidizable shaped form, and (ii) a particulate fluidizable heat transfer medium, preferably sand, to form pyrolysis products; and
   B) condensing and isolating liquid pyrolysis oil product from said pyrolysis products and collecting and isolating non-condensable gases separately from the liquid pyrolysis oil product.

2. A pyrolysis process as in Claim 1 wherein said catalyst as charged into the reactor contains 0.1 to 20 wt% of calcium, and wherein the contents of the reactor is and remains free of separately added metal components other than (a) divalent and trivalent metal contents of the layered dihydroxide of said catalyst and (b) the added calcium content of said catalyst.

3. A process as in any of Claims 1-2 wherein said pyrolysis is a fast pyrolysis.

4. A process as in any of Claims 1-3 wherein the biomass material is a lignocellulosic biomass.

5. A process as in any of Claims 1-4 wherein said liquid pyrolysis oil product has a total acid number measured in terms of milligrams of KOH/gram of liquid product that is lower than a total acid number measured in the same way on a liquid pyrolysis oil product obtained by pyrolysis under the same conditions except for use of sand alone (100 parts by weight) or a combination of a layered dihydroxide (25 parts by weight) and sand (75 parts by weight) in place of said catalyst (25 parts by weight) and sand (75 parts by weight).

6. A process as in any of Claims 1-4 wherein the biomass material fed has a weight percentage of oxygen removed as determined by the General Pyrolysis Test Procedure

$$O_{removal} = \frac{X_{CO} \cdot M_O / M_{CO} + X_{CO2} \cdot 2M_O / M_{CO2} + X_{H2O} \cdot M_O / M_{H2O}}{O_{feed} / 100\%}$$

and as calculated in accordance with the expression wherein:

$O_{removal}$ is wt% of oxygen removed (wt% based on oxygen in the biomass material fed)

$M_O$ : molar mass of O = 15.999 (g/mol)

$X_{CO}$ : yield of CO (wt% on biomass material fed)

$M_{CO}$ : molar mass of CO = 28.01 (g/mol)

$X_{CO2}$ : yield of $CO_2$ (wt% on biomass material fed)

$M_{CO2}$ : molar mass of $CO_2$ = 44.01 (g/mol)

$X_{H2O}$ : yield of $H_2O$ (wt% on biomass material fed)

$M_{H2O}$ : molar mass of $H_2O$ = 18.02 (g/mol)

$O_{feed}$ : oxygen content in the biomass material fed (wt%),

is higher than the weight percentage, as determined in the same way, of oxygen removed from biomass material subjected to pyrolysis under the same conditions except for use of sand alone (100 parts by weight) or a combination of a layered dihydroxide (25 parts by weight) and sand (75 parts by weight) in place of the rehydrated calcined calcium-containing layered dihydroxide catalyst (25 parts by weight) and sand (75 parts by weight).

7. A pyrolysis process as in Claim 1 which is a fast pyrolysis process, wherein the reactor is a fluidized bed reactor; and wherein the pyrolysis products are continuously removed.

8. A process as in claim 1 wherein said catalyst as charged to the reactor was in a pre-agglomerized flowable shaped form.

9. A process as in any of Claims 1 or 2 wherein said catalyst as charged into the reactor has a layered dihydroxide component which comprises, consists essentially of, or consists of a magnesium/aluminum layered dihydroxide.

10. A process as in Claim 9 wherein said magnesium/aluminum layered dihydroxide has a molar ratio of MgO to $Al_2O_3$ of 2:1 to 8:1.


**Patentansprüche**

1. Pyrolyseverfahren zur Herstellung partiell kondensierbarer dampfförmiger Produkte aus einem teilchenförmigen oder unterteilten Biomassematerial, dass abgesehen von optionalem trockenen und oder optionaler Größenreduktion unbehandelt ist, wobei das Verfahren umfasst:

A) Unterziehen des Biomassematerials einer Pyrolyse bei einer oder mehreren Temperaturen von 500 °C und darüber in einem Reaktor, der (i) einen Katalysator, der, so wie er in den Reaktor eingeführt wird, ein rehydratisiertes, calciniertes, Calcium enthaltendes, geschichtetes Dihydroxid ist, das Teilchen mit einer durchschnittlichen Teilchengröße von 40 bis 400 Mikrometer umfasst, wobei der Katalysator gegebenenfalls in einer pre-agglommerierten, fließfähigen oder fluidisierbar gestalteten Form vorliegt, und (ii) ein teilchenförmiges, fluidisierbares Wärmeübertragungsmedium enthält, vorzugsweise Sand, um Pyrolyseprodukte zu bilden, und

B) Kondensierter und Isolieren von flüssigem Pyrolyseölprodukt aus den Pyrolyseprodukten und Sammeln und Isolieren von nicht-kondensierter Gasen getrennt von dem flüssigen Pyrolyseölprodukt.

2. Pyrolyseverfahren nach Anspruch 1, bei dem der Katalysator, so wie er in den Reaktor eingeführt wird, 0,1 bis 20 Gew.-% Calcium enthält und bei dem die Inhalte des Reaktors frei von separat zugeführten Metallkomponenten sind und bleiben, die von (a) zweiwertigen und dreiwertigen Metall Inhalten des geschichteten Dihydroxid des Katalysators und (b) dem zugesetzten Calciumgehalt des Katalysators verschieden sind.

3. Verfahren nach einem der Ansprüche 1 bis 2, bei dem die Pyrolyse eine schnelle Pyrolyse ist.

4. Verfahren nach einem der Ansprüche 1 bis 3, bei dem das Biomassematerial eine Lignocellulose-Biomasse ist.

5. Verfahren nach einem der Ansprüche 1 bis 4, bei dem das flüssige Pyrolyseölprodukt eine Gesamtsäurezahl aufweist, gemessen in Milligramm KOH/Gramm von flüssigem Produkt, die kleiner ist als eine Gesamtsäurezahl, gemessen auf die gleiche Weise, eines flüssigen Pyrolyseölprodukts, das durch Pyrolyse unter den gleichen Bedingungen erhalten worden ist, ausgenommen der Verwendung von Sand allein (100 Gewichtsteile) oder einer Kombination von geschichtetem Dihydroxid (25 Gewichtsteile) und Sand (75 Gewichtsteile) anstelle des Katalysators (25 Gewichtsteile) und Sand (75 Gewichtsteile).

**6.** Verfahren nach einem der Ansprüche 1 bis 4, bei dem das zugeführte Biomassematerial einen Gewichtsprozentsatz an entferntem Sauerstoff hat, wie bestimmt durch das allgemeine Pyrolysetestverfahren und wie berechnet gemäß der Gleichung:

$$O_{removal} = \frac{X_{CO} \cdot M_O / M_{CO} + X_{CO2} \cdot 2M_O / M_{CO2} + X_{H2O} \cdot M_O / M_{H2O}}{O_{feed} / 100\%}$$

in der

$O_{removal}$ die Gew.-% entfernter Sauerstoff sind (Gew.-% auf Basis von Sauerstoff in dem zugeführten Biomassematerial)
$M_O$: Molmasse von O = 15,999 (g/mol)
$X_{CO}$: Ausbeute an CO (Gew.-% des zugesetzten Biomassematerials)
$M_{CO}$: Molmasse von CO = 28,01 (g/mol)
$X_{CO2}$: Ausbeute an $CO_2$ (Gew.-% des zugesetzen Biomassematerials)
$M_{CO2}$: Molmasse von $CO_2$ = 44,01 (g/mol)
$X_{H2O}$: Ausbeute an $H_2O$ (Gew. -% des zugesetzten Biomassematerials)
$M_{H2O}$: Molmasse von $H_2O$ = 18,02 (g/mol)
$O_{feed}$: Sauerstoffgehalt des zugeführten Biomassematerials (Gew. -%),

der größer ist als der Gewichtsprozentsatz, wie bestimmt auf die gleiche Weise, von aus dem Biomassematerial entferntem Sauerstoff, dass einer Pyrolyse unter den gleichen Bedingungen unterzogen worden ist, ausgenommen der Verwendung von Sand allein (100 Gewichtsteile) oder einer Kombination von geschichtetem Dihydroxid (25 Gewichts Teile) und Sand (75 Gewichtsteile) anstelle des re-hydratisierten, calcinierten, Calcium enthaltenden, geschichteten Dihydroxidkatalysators (25 Gewichtsteile) und Sand (75 Gewichtsteile).

**7.** Pyrolyseverfahren nach Anspruch 1, das ein schnelles Pyrolyseverfahren ist, bei dem der Reaktor ein Wirbelbettreaktor ist und bei dem die Pyrolyseprodukte kontinuierlich entfernt werden.

**8.** Verfahren nach Anspruch 1, bei dem der Katalysator, so wie er in den Reaktor eingeführt wird, in einer pre-agglomerierten, fließfähig ausgestalteten Form vorliegt.

**9.** Verfahren nach einem der Ansprüche 1 oder 2, bei dem der Katalysator, so wie er in den Reaktor eingeführt wird, eine geschichtete die Hydroxidkomponente aufweist, die Magnesium/Aluminium-geschichtetes Dihydroxid umfasst, im wesentlichen daraus besteht oder daraus besteht.

**10.** Verfahren nach Anspruch 9, bei dem das Magnesium/-Aluminium-geschichtete Dihydroxid ein Molverhältnis von MgO zu $Al_2O_3$ von 2:1 bis 8:1 aufweist.

**Revendications**

**1.** Procédé de pyrolyse pour produire des produits vaporeux partiellement condensables à partir d'une matière de biomasse particulaire ou subdivisée non-traitée, exceptée pour un séchage et/ou une réduction de taille facultatif, ledit procédé comprenant de :

A) soumettre ladite matière de biomasse à une ou plusieurs températures d'au moins 500°C dans un réacteur contenant :

(i) un catalyseur qui, chargé dans le réacteur, est un dihydroxyde en couches contenant du calcium calciné réhydraté constitué de particules ayant une granulométrie moyenne de 40 à 400 $\mu$m, lequel catalyseur étant facultativement sous une forme pré-agglomérée fluide ou fluidifiable, et
(ii) un support de transfert de chaleur particulaire fluidifiable, de préférence du sable, pour former des produits de pyrolyse ; et

B) condenser et isole un produit de pyrolyse liquide huileux desdits produits de pyrolyse, et collecter et isoler des gaz non-condensables séparément du produit de pyrolyse liquide huileux.

2. Procédé de pyrolyse selon la revendication 1, dans lequel ledit catalyseur chargé dans le réacteur contient 0,1 à 20 % en poids de calcium, et dans lequel le contenu du réacteur est et reste exempt de composants métalliques ajoutés autres que (a) des teneurs en métaux divalents et trivalents de la couche de dihydroxyde en couches dudit catalyseur, et (b) la teneur en calcium ajouté dudit catalyseur.

3. Procédé de pyrolyse selon l'une quelconque des revendications 1 ou 2, dans lequel ladite pyrolyse est une pyrolyse rapide.

4. Procédé de pyrolyse selon l'une quelconque des revendications 1 à 3, dans lequel la matière de biomasse est une biomasse lignocellulosique.

5. Procédé de pyrolyse selon l'une quelconque des revendications 1 à 4, dans lequel ledit produit de pyrolyse liquide huileux a un indice d'acide total mesuré en mg KOH / g de produit liquide qui est inférieur à l'indice d'acide total mesuré de la même façon sur un produit de pyrolyse liquide huileux obtenu par pyrolyse dans les mêmes conditions hormis l'utilisation de sable uniquement (100 parties en poids) ou d'une combinaison d'un dihydroxyde en couches (25 parties en poids) et de sable (75 parties en poids) au lieu dudit catalyseur (25 parties en poids) et de sable (75 parties en poids).

6. Procédé de pyrolyse selon l'une quelconque des revendications 1 à 4, dans lequel l'alimentation de matière de biomasse a un pourcentage en poids d'oxygène extrait comme déterminé par la Procédure de Test de Pyrolyse Générale
et comme calculé conformément à l'expression

$$O_{removal} = \frac{X_{CO} \cdot M_O / M_{CO} + X_{CO2} \cdot 2M_O / M_{CO2} + X_{H2O} \cdot M_O / M_{H2O}}{O_{feed} / 100\%}$$

où

Oremoval est le pourcentage en poids d'oxygène extrait (% en poids sur l'oxygène dans la matière de biomasse alimentée)
$M_O$ poids molaire de 0 = 15,999 g/mol
$X_{CO}$ rendement en CO (% en poids sur la matière de biomasse alimentée)
$M_{CO}$ poids molaire de CO = 28,01 g/mol
$X_{CO2}$ rendement en $CO_2$ (% en poids sur la matière de biomasse alimentée)
$M_{CO2}$ poids molaire de $CO_2$ = 44,01 g/mol
$X_{H2O}$ rendement en $H_2O$ (% en poids sur la matière de biomasse alimentée)
$M_{H2O}$ poids molaire de $H_2O$ = 18,02 g/mol
$O_{feed}$ teneur en oxygène dans la matière de biomasse alimentée (% en poids)

supérieure au pourcentage en poids, déterminé de la même façon, d'oxygène extrait de la matière de biomasse soumise à pyrolyse dans les mêmes conditions hormis l'utilisation de sable uniquement (100 parties en poids) ou d'une combinaison d'un dihydroxyde en couches (25 parties en poids) et de sable (75 parties en poids) au lieu dudit catalyseur (25 parties en poids) et de sable (75 parties en poids).

7. Procédé de pyrolyse selon la revendication 1, qui est un procédé de pyrolyse rapide, le réacteur étant un réacteur à lit fluidisé, et les produits de pyrolyse étant extraits en continu.

8. Procédé de pyrolyse selon la revendication 1, dans lequel ledit catalyseur chargé dans le réacteur étant sous une forme pré-agglomérée fluide.

9. Procédé de pyrolyse selon la revendication 1 ou 2, dans lequel ledit catalyseur chargé dans le réacteur est un composant dihydroxyde en couches qui contient, consiste essentiellement en ou consiste en un dihydroxyde de magnésium/aluminium en couches.

**10.** Procédé selon la revendication 9, dans lequel ledit dihydroxyde de magnésium/aluminium en couches a un rapport molaire MgO/Al$_2$O$_3$ de 2:1 à 8:1.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8293952 B
- US 20110245545 A
- EP 2105486 A1
- US 6593265 B, Stamires
- US 20080032884 A

### Non-patent literature cited in the description

- Manual of Methods and Procedures for Catalyst Characterization. **J. HABER et al.** Pure and Appl. Chem. 1995, vol. 67, 1257-1306
- **KRIJN ; DE JONG.** Synthesis of Solid Catalysts. Wiley, 2009
- **S. KERSTEN.** Catalysis for Renewables: From Feedstock to Energy Production. Wiley-VCH Verlag, 2007, 119-141